# EUROPÄISCHE PATENTSCHRIFT

(11) **EP 4 048 510 B1**
(45) Veröffentlichungstag und Bekanntmachung des Hinweises auf die Patenterteilung: **16.08.2023**
(21) Anmeldenummer: 20799979.8
(22) Anmeldetag: 06.10.2020
(51) Int. Cl.: B29D 30/00, B29D 30/06

(54) **VORRICHTUNG UND VERFAHREN ZUR HANDHABUNG VON REIFEN SOWIE REIFENHEIZPRESSE**
DEVICE AND METHOD FOR HANDLING TYRES AND TYRE CURING PRESS
DISPOSITIF ET PROCÉDÉ POUR LA MANIPULATION DE PNEUS ET PRESSE DE VULCANISATION DE PNEUS

(30) Priorität: 21.10.2019 DE 102019007423
(43) Veröffentlichungstag der Anmeldung: 31.08.2022
(73) Patentinhaber: Harburg-Freudenberger Maschinenbau GmbH, 21079 Hamburg (DE)
(72) Erfinder: BAHLKE, Stefan, 21337 Lüneburg (DE)
(74) Vertreter: Klickow & Wetzel PartGmbB
(86) Internationale Anmeldenummer: PCT/DE2020/100866
(87) Internationale Veröffentlichungsnummer: WO 2021/078326

(56) Entgegenhaltungen:
- EP-A2- 0 099 507
- WO-A1-2016/206670
- DE-A1-102017 221 822

## Beschreibung

Die Erfindung betrifft eine Vorrichtung zur Handhabung von Reifen, die insbesondere zum Entladen einer Reifenheizpresse ausgebildet ist.

Darüber hinaus betrifft die Erfindung eine Reifenheizpresse aufweisend eine Vorrichtung zur Handhabung von Reifen.

Weiterhin betrifft die Erfindung ein Verfahren zur Handhabung von Reifen, mit dem eine Reifenheizpresse entladen wird.

Reifenheizpressen werden zur Vulkanisation von Reifenrohlingen zu Reifen eingesetzt und weisen mindestens eine Vulkanisationskammer auf. Dabei müssen die Reifenrohlinge in die Vulkanisationskammer geladen werden und die Reifen nach der erfolgten Vulkanisation aus der Vulkanisationskammer entladen werden. Dazu werden Vorrichtungen zur Handhabung von Reifen eingesetzt, die je nach Ausführungsform als Belader, Entlader oder als Be- und Entlader von jeweils mindestens einer Vulkanisationskammer verwendbar sind.

Derzeit werden sowohl zur Beladung als auch zur Entladung der Vulkanisationskammer komplexe Vorrichtungen zur Handhabung von Reifen eingesetzt, die teilweise teuer in der Herstellung und aufwendig in der Wartung sind.

Diese komplexen Vorrichtungen zur Handhabung von Reifen, beispielsweise bekannt aus der WO 2016 206 670 A1, weisen Greifer auf, mit denen die Reifen oder die Reifenrohlinge durch eine Klemmung der Reifen im Bereich der Wülste von innen klemmbar und dadurch aufnehmbar sind.

Diese Funktionalität erfordert einen verhältnismäßig komplexen mechanischen Aufbau der Greifer und damit auch der entsprechenden Vorrichtungen zur Handhabung von Reifen, der auch mit einem hohen Gewicht einhergeht.

Diese hohen Gewichte müssen beim Be- und/oder Entladevorgang bewegt werden, sodass auch der Energieverbrauch der entsprechenden Vorrichtungen höher ist.

Insbesondere bei der Entladung von vulkanisierten Reifen aus der Vulkanisationskammer einer Reifenheizpresse bestehen jedoch häufig keine derart hohen Anforderungen an die Präzision der Handhabung und die schonende Behandlung der Reifen. Vor allem, wenn die vulkanisierten Reifen nicht einer Nachbehandlungsvorrichtung (z.B. Postcure-Inflator) zugeführt, sondern lediglich auf einer Transporteinrichtung oder auf einem Zwischenlagerplatz abgelegt werden sollen.

Aus der DE 10 2017 221 822 A1 ist bereits eine Vorrichtung zur Handhabung von Reifen bekannt, bei der eine vertikale Säule, eine vertikale Führung sowie ein Vertikalantrieb verwendet sind. Ein gabelartiges Handhabungselement ist unter Verwendung eines Schwenkantriebes in einer horizontalen Richtung verschwenkbar. Die Vorrichtung ist zur Verwendung bei einer Reifenheizpresse vorgesehen.

Ein weiteres Verfahren zur Handhabung von Reifen wird in der EP 0 099 507 A2 schrieben.

Eine Aufgabe der Erfindung ist es, eine Vorrichtung zur Handhabung von Reifen zu schaffen, die einen im Hinblick auf das Gewicht, die Wartung und/oder die Herstellung verbesserte Eigenschaften aufweist.

Diese Aufgabe wird erfindungsgemäß durch eine Vorrichtung zur Handhabung von Reifen gemäß Patentanspruch 1 gelöst.

Eine weitere Aufgabe der Erfindung ist es, eine im Hinblick auf eine Vorrichtung zur Handhabung von Reifen verbesserte Reifenheizpresse zu schaffen.

Diese Aufgabe wird erfindungsgemäß durch eine Reifenheizpresse gemäß Patentanspruch 4 gelöst.

Eine weitere Aufgabe der Erfindung ist es, ein Verfahren zur Handhabung von Reifen anzugeben, das die Verwendung einer erfindungsgemäßen Vorrichtung zur Handhabung von Reifen bei der Entladung der Vulkanisationskammer einer Reifenheizpresse ermöglicht.

Diese Aufgabe wird durch ein Verfahren zur Handhabung von Reifen gemäß Patentanspruch 11 gelöst.

Die im folgenden offenbarten Merkmale einer Vorrichtung zur Handhabung von Reifen sind sowohl einzeln als auch in allen ausführbaren Kombinationen Teil der Erfindung.

Eine erfindungsgemäße Vorrichtung zur Handhabung von Reifen weist zumindest eine Gabel auf, die entlang einer vertikalen Achse verfahrbar und in horizontaler Richtung verschwenkbar ist.

Die Gabel ist zur Aufnahme eines Reifens auf einer auf der Oberseite der Gabel ausgebildeten Auflage ausgebildet.

In einer vorteilhaften Ausführungsform der Erfindung ist die Gabel zweigeteilt und weist einen freien Mittenbereich sowie eine offene Seite auf.

In einer besonders bevorzugten Ausführungsform ist die Gabel dazu in horizontaler Richtung etwa U-, bzw. C- oder V-förmig ausgebildet bzw. weist einen Teil auf, der entsprechend ausgebildet ist.

Reifenheizpressen weisen in ihrer Vulkanisationskammer in der Regel einen Mittenmechanismus auf, auf dem der Reifenrohling bzw. der Reifen innerhalb der Vulkanisationskammer fixierbar und von innen mit einem Druck beaufschlagbar ist. Dazu weist ein derartiger Mittenmechanismus beispielweise aus einer die Vulkanisationskammer nach unten hin begrenzenden Basisplatte heraus verfahrbare und ineinander angeordnete Rohre auf, an denen Klemmteller befestigt sind.

Mithilfe eines solchen Mittenmechanismus ist ein vulkanisierter Reifen von der Basisplatte einer Vulkanisationskammer anhebbar. Jedoch befindet sich dann mittig unter dem angehobenen Reifen der ausgefahrene Teil des Mittenmechanismus.

Durch die offene Seite und den freien Mittenbereich der Gabel einer erfindungsgemäßen Vorrichtung zur Handhabung von Reifen kann die Gabel um den Mittenmechanismus herumgreifen und eine ausreichend große Auflage für den Reifen bieten, sodass dieser sicher auf der Aufnahme der Gabel aufliegt.

Die Öffnung der Gabel auf der offenen Seite und der freie Mittenbereich sind dabei so groß dimensioniert, dass auch die größten Elemente des Mittenmechanismus, die in der Regel durch die Klemmteller gegeben sind, mit etwas Spiel durch die Öffnung hindurch passen.

Die Gabel ist insgesamt so dimensioniert und die Arme der Gabel sind so geformt, dass diese unter Berücksichtigung der erforderlichen Größe des freien Mittenbereichs und der geöffneten Seite bei einem auf der Auflage der Gabel aufliegenden Reifen so dicht an der Reifenwulst wie möglich anliegen.

In einer Ausführungsform der Erfindung ist die Gabel als ein Schweißteil aus Stahlrohren gefertigt.

In einer bevorzugten Ausführungsform der Erfindung ist die Gabel frei von beweglichen Teilen.

Das vertikale Verfahren der Gabel einer erfindungsgemäßen Vorrichtung zur Handhabung von Reifen ist mithilfe eines Vertikalantriebs realisiert, mit dem die Gabel entlang einer vertikalen Führung beweglich ist.

Eine erfindungsgemäße Vorrichtung zur Handhabung von Reifen weist vorteilhaft eine vertikale Säule auf, an der die vertikale Führung befestigt ist und die die Vorrichtung zur Handhabung von Reifen trägt.

Das Verschwenken der Gabel einer erfindungsgemäßen Vorrichtung zur Handhabung von Reifen ist mithilfe einer Schwenkantriebs realisiert, mit dem die Gabel um eine vertikale Achse herum in horizontaler Richtung verschwenkbar ist.

In einer Ausführungsform der Erfindung erfolgt das Verschwenken der Gabel pneumatisch mit Dämpfern.

In einer Ausführungsform der Erfindung ist der Einschwenkwinkel durch eine Begrenzung des Maximalhubs des Schwenkzylinders mithilfe der Einstellung des Stoßdämpfers einstellbar.

In einer Ausführungsform der Erfindung ist durch eine Einstellung des Einschwenkwinkels die Anpassung der Vorrichtung zur Handhabung von Reifen an verschiedene Reifengrößen ermöglicht. Dazu nimmt der Abstand der Arme der Gabel zueinander in Richtung der offenen Seite zu und durch den Einschwenkwinkel ist einstellbar, welchen Abstand die Arme der Gabel im Bereich der Reifenwulst des jeweiligen Reifens haben.

Dadurch sind in einer Ausführungsform der Erfindung Reifen in einem Größenbereich von etwa 15 bis 25 Zoll mit einer Vorrichtung zur Handhabung von Reifen sicher handhabbar.

Die vertikale Führung der Vorrichtung zur Handhabung von Reifen ist in Ausführungsformen der Erfindung als eine Rundführung aus einer Stange ausgebildet, auf der die Gabel mithilfe einer Halterung vertikal verschiebbar gelagert ist.

In anderen Ausführungsformen der Erfindung ist die Führung als ein Profil, beispielsweise ein Hohlprofil, oder als eine Schiene, beispielsweise eine hutartige Schiene, ausgebildet auf dem bzw. der ein Führungswagen oder Schlitten vertikal verschiebbar gelagert ist, an dem die Gabel befestigt ist.

Damit der Schwenkantrieb mitsamt der Gabel vertikal verschiebbar ist, ist auch dieser auf der Führung verschiebbar gelagert.

In einer bevorzugten Ausführungsform der Erfindung weist der Schwenkantrieb eine Lagervorrichtung auf, über die dieser an der Führung gelagert ist. Um den Schwenkantrieb dabei gegen ein Verdrehen in horizontaler Richtung zu sichern, damit lediglich die Gabel schwenkbar ist, ist der Schwenkantrieb in vorteilhaften Ausführungsformen der Erfindung mithilfe einer Blockiereinrichtung in horizontaler Richtung blockiert.

Eine solche Blockiereinrichtung ist in Ausführungsformen der Erfindung als eine Rolle oder als ein Gleitschuh ausgebildet, die bzw. der sich beispielsweise an der vertikalen Säule der Vorrichtung zur Handhabung von Reifen abstützt.

In einer Ausführungsform der Erfindung ist der Vertikalantrieb als ein hydraulischer Antrieb mit Zylindern realisiert.

In einer Ausführungsform der Erfindung sind die Positionen "Einschwenkposition", "Ausschwenkposition", "Ablageposition" durch mechanische Anschläge im Vertikalantrieb und/oder der vertikalen Führung fest eingestellt.

Ein Vorteil gegenüber einen Greifer aufweisenden Vorrichtungen zur Handhabung von Reifen ist, dass die Hubbewegungen der Gabel nicht mit dem oberen Klemmteller des Mittenmechanismus der Vulkanisationskammer synchronisiert werden müssen, weil der Balg gestreckt wird, bevor die Gabel den Reifen über den Mittenmechanismus hinaus hebt.

Dadurch ist auch die Verwendung von Initiatoren anstelle von Wegemesssystemen (WMS) ermöglicht. Dies ist in Ausführungsformen der Erfindung umgesetzt.

In einer Ausführungsform der Erfindung ist die Einschwenkposition universell und unabhängig von der Position der Druckplatte. Dies ist dadurch ermöglicht, dass der Spalt zwischen unterer Formschale und unterem Klemmring, der durch den Ausbrechhub erzeugt wird, so groß gewählt ist, dass die Gabel bei jeder Stellung der Schließkraftzylinder der Reifenheizpresse in diesen Spalt hineinpasst.

In einer Ausführungsform der Erfindung ist die Vorrichtung zur Handhabung von Reifen zur Entladung von zwei Vulkanisationskammern, beispielsweise den beiden Vulkanisationskammern einer Doppelheizpresse ausgebildet.

In einer Ausführungsform der Erfindung weist die Vorrichtung zur Handhabung von Reifen dazu eine Doppelgabel auf, die in beide Rotationsrichtungen in horizontaler Ebene eine geöffnete Seite und einen freien Mittenbereich aufweist.

In einer anderen Ausführungsform der Erfindung ist die Gabel dazu um eine horizontal ausgerichtete Achse um 180° verschwenkbar.

Mit einer erfindungsgemäßen Vorrichtung zur Handhabung von Reifen ist ein einfacher und robuster Aufbau realisiert, der prinzipbedingt keine hohen Genauigkeiten erfordert.

Eine erfindungsgemäße Reifenheizpresse weist zumindest eine erfindungsgemäße Vorrichtung zur Handhabung von Reifen gemäß der vorstehenden Beschreibung auf.

In erfindungsgemäßen Ausführungsformen einer Reifenheizpresse ist im Gegensatz zum Stand der Technik bei einem Verfahren des Reifens auf der Gabel in die Ausschwenkposition kein "Festhalten" der Grundplatte wegen des Eigengewichts erforderlich, da sich der Mittenmechanismus mitsamt des Balgs in der Grundplatte (Heizplatte) abstützt. Dies sorgt bei einer durch einen klebenden Reifen bei dem Verfahren der Gabel nach oben in gleicher Richtung auf den Mittenmechanismus wirkenden Kraft dafür, dass der untere Klemmring die Grundplatte nicht mit von den Zylindern abhebt, was bei Reifenheizpressen, bei denen der Mittenmechanismus gegen das Pressenunterteil abgestützt ist, passieren kann.

In einer vorteilhaften Ausgestaltung einer erfindungsgemäßen Reifenheizpresse weist diese mindestens einen Rollengang zum Abtransport der aus der Vulkanisationskammer entladenen Reifen auf.

Damit der Reifen von der Gabel auf dem Rollengang abgelegt werden kann, muss die Gabel durch den Rollengang hindurchtauchen, sofern der Reifen nicht durch ein Drehen oder Kippen der Gabel von dieser entladbar ist. Dazu sind in einer bevorzugten Ausführungsform der Erfindung einige der Rollen des Rollengangs im Abladebereich in Rollensegmente aufgeteilt, sodass im Rollengang eine Aussparung realisiert ist, die der Kontur der Gabel entspricht.

In einer bevorzugten Ausführungsform der Erfindung ist die Aussparung im Abladebereich des Rollengangs etwas größer ausgebildet als die äußere Kontur der Gabel, sodass bei einem hindurchtauchen der Gabel durch den Rollengang ein gewisser Abstand zwischen den Rollen bzw. den Rollensegmenten und der Gabel eingehalten wird.

In einer Ausführungsform der Erfindung verläuft der Rollengang von der Reifenheizpresse weg abfallend.

In einer vorteilhaften Ausführungsform der Erfindung ist das Gefälle des Rollengangs dabei so gewählt, dass sich ein im Abladebereich auf dem Rollengang abgelegter Reifen durch die auf den Reifen wirkende Schwerkraft den Rollengang entlang bewegt. Das Gefällte beträgt in Ausführungsformen der Erfindung dazu etwa zwischen 10° und 15°.

In einer Ausführungsform der Erfindung ist im Bereich des Rollengangs mithilfe von mindestens einer Sperrvorrichtung zumindest eine Warteposition realisiert. Die mindestens eine Sperrvorrichtung ist in einen Sperrzustand und in einen geöffneten Zustand versetzbar, wobei ein auf dem Rollengang abgelegter Reifen in dem Sperrzustand der mindestens einen Sperrvorrichtung auf einer zugeordneten Warteposition gehalten wird und wobei ein auf dem Rollengang abgelegter Reifen in dem geöffneten Zustand der mindestens einen Sperrvorrichtung die zugeordnete Warteposition verlassen bzw. diese passieren kann.

In einer Ausführungsform der Erfindung weist die Sperrvorrichtung mindestens ein aus der Roll-Ebene des Rollengangs nach oben hin ausfahrbares Sperrelement auf, an dem ein auf dem Rollengang liegender Reifen in der zugeordneten Warteposition im Sperrzustand der Sperrvorrichtung anliegt. Zur Versetzung der Sperrvorrichtung in den geöffneten Zustand ist das mindestens eine Sperrelement unter die Roll-Ebene des Rollengangs einfahrbar, sodass ein auf dem Rollengang rollender Reifen die Sperrvorrichtung ungehindert passieren kann.

Ein erfindungsgemäßes Verfahren zur Behandlung von Reifen dient zur Entladung einer Reifenheizpresse und weist zumindest die folgenden Schritte auf, wobei die Vulkanisationskammer der jeweiligen Reifenheizpresse initial geöffnet ist:
- Verfahren der Gabel einer Vorrichtung zur Behandlung von Reifen in vertikaler Richtung in die Einschwenkposition
- Einschwenken der Gabel unter einen in der geöffneten Vulkanisationskammer befindlichen Reifen
- Verfahren der Gabel nach oben in die Ausschwenkposition, dabei Aufnahme des Reifens auf die Auflage der Gabel
- Ausschwenken der Gabel mit dem auf der Gabel liegenden Reifen aus der Vulkanisationskammer
- Verfahren der Gabel nach unten in die Ablageposition und Ablegen des Reifens

In einer vorteilhaften Ausführungsform des erfindungsgemäßen Verfahrens ist dieses als ein Verfahren zur Entladung einer Reifenheizpresse mit einer Vorrichtung zur Behandlung von Reifen aufweisend eine Gabel ausgebildet und umfasst neben den auf die Vorrichtung zur Behandlung von Reifen gerichteten Verfahrensschritten auch die zur Entladung im Bereich der Vulkanisationskammer der Reifenheizpresse nötigen Verfahrensschritte.

Die Vulkanisationskammer der jeweiligen Reifenheizpresse ist initial geöffnet und der vulkanisierte Reifen ist aus der Form bzw. den Formteilen ausgebrochen. Die dazu notwendigen Verfahrensschritte können auch nach dem Verfahren oder vorteilhaft während des Verfahrens der Gabel in die Einschwenkposition durchgeführt werden, müssen jedoch vor dem Einschwenken der Gabel erfolgt sein.

Diese Schritte umfassen das Öffnen der Vulkanisationskammer, das Ausbrechen des Reifens aus der Form, das Einziehen der Formsegmente und das Anheben des Reifens mit dem Mittenmechanismus der jeweiligen Vulkanisationskammer, sodass der Reifen von den Seiten und abgesehen von dem durch den Mittenmechanismus besetzten Bereich von unten zugänglich und in einem ausreichenden Abstand über der Basisplatte der Vulkanisationskammer gehalten wird. Der Abstand ist ausreichend, wenn dieser mindestens der Höhe der Gabel der Vorrichtung zur Behandlung von Reifen zuzüglich der Stärke der unteren Hälfte einer mittengeteilten Form und einer gewissen Reserve entspricht. Die zusätzlich benötigte Reserve ist abhängig von der Genauigkeit der Vorrichtung zur Behandlung von Reifen bei dem Anfahren der Einschwenkposition. In einer Ausführungsform der Erfindung beträgt der durch den Hub des Mittenmechanismus erzeugte Abstand des Reifens über der Basisplatte der Vulkanisationskammer etwa 400 mm, wobei die Stärke der unteren Hälfte der Form etwa 200 mm beträgt.

Die zu entladende Reifenheizpresse weist einen Mittenmechanismus auf, mit dem ein Reifen innenseitig fixierbar und anhebbar ist.

In einer Ausführungsform weist der Mittenmechanismus einen unteren und einen oberen Klemmteller auf, mit denen der Reifen klemmend fixierbar ist.

Im Übrigen umfasst das Verfahren zur Behandlung von Reifen in der Ausführungsform als Verfahren zur Entladung einer Reifenheizpresse die folgenden Verfahrensschritte:
- Verfahren der Gabel einer Vorrichtung zur Behandlung von Reifen in vertikaler Richtung in die Einschwenkposition
- Anheben des Reifens in der geöffneten Vulkanisationskammer mithilfe des Mittenmechanismus
- Einschwenken der Gabel unter einen in der geöffneten Vulkanisationskammer befindlichen Reifen, insbesondere unter den unteren Klemmteller des Mittenmechanismus
- Freigeben des Reifens durch Lösen der Fixierung des Reifens durch den Mittenmechanismus
- Verfahren der Gabel nach oben in die Ausschwenkposition, dabei Aufnahme des Reifens auf der Auflage der Gabel
- Ausschwenken der Gabel mit dem auf der Gabel liegenden Reifen aus der Vulkanisationskammer
- Verfahren der Gabel nach unten in die Ablageposition und Ablegen des Reifens

Weist der Mittenmechanismus Klemmteller zur Fixierung des Reifens auf, so erfolgt das Freigeben des Reifens durch ein Verfahren der Klemmteller. Dazu weist das erfindungsgemäße Verfahren zur Handhabung von Reifen in einer Ausführungsform die Schritte Verfahren des unteren Klemmtellers in die untere Lage und Strecken des oberen Klemmtellers auf. Das Strecken des oberen Klemmtellers erfolgt in einer bevorzugten Ausführungsform gleichzeitig mit dem Verfahren der Gabel nach oben in die Ausschwenkposition.

Ist der Mittenmechanismus der Vulkanisationskammer mit einem Balg zur Beaufschlagung des Reifens von innen mit einem Druck ausgerüstet, so wird der Balg vor der Aufnahme des Reifens auf der Auflage der Gabel durch das Verfahren der Gabel aus der Höhe der Einschwenkposition in die Ausschwenkposition gestreckt, sodass der Reifen in vertikaler Richtung reibungsfrei über den Balg bewegt werden kann (Freigeben des Reifens). In einer vorteilhaften Ausführungsform des Verfahrens erfolgt das Strecken des Balgs gleichzeitig mit dem Verfahren des unteren Klemmtellers in die untere Lage.

Grundsätzlich erfolgt das Strecken des Balgs durch ein Verfahren des unteren Klemmtellers nach unten und des oberen Klemmtellers um den Streckhub nach oben. Das Verfahren der Klemmteller zum Strecken des Balgs kann dabei gleichzeitig oder nacheinander erfolgen. Zum Entladen genügt in der Regel eine Teilstreckung des Balgs durch ein Verfahren des unteren Klemmtellers. Die Effizienz der Reifenheizpresse lässt sich jedoch verbessern, indem der Balg unmittelbar beim Ausschwenken bereits vollständig gestreckt ist, da dies für ein schnelles und unmittelbar an das Entladen der Vulkanisationskammer anschließendes Beladen erforderlich ist.

Der Streckhub (Hub des oberen Klemmtellers, um den Balg zu strecken) beträgt in Ausführungsformen der Erfindung etwa 750 mm bis 1000 mm.

Nach dem Ausschwenken der Gabel aus der Vulkanisationskammer kann bereits der Beladevorgang der Heizpresse mit einen Reifenrohling ausgeführt werden. Ist der Mittenmechanismus der Vulkanisationskammer mit einem Balg ausgerüstet, so ist das Beladen über den gestreckten Balg möglich.

Bei einer Reifenheizpresse aufweisend einen Rollengang zum Abtransport der Reifen erfolgt das Ablegen des Reifens im Abladebereich auf dem Rollengang. Dazu taucht die Gabel durch den Rollengang hindurch in eine unter dem Rollengang liegende Position, wobei der Reifen auf dem Rollengang verbleibt.

Sobald der Reifen auf dem Rollengang aus dem Bereich über der Gabel gerollt ist, kann die Gabel wieder nach oben hin über den Rollengang, beispielsweise in die Einschwenkposition, verfahren werden.

In vorteilhaften Ausgestaltungen des erfindungsgemäßen Verfahrens zur Handhabung von Reifen ist die Zykluszeit einer Reifenheizpresse im Vergleich zur Verwendung von Handhabungsvorrichtungen mit einem Greifer um etwa 5 bis 20 Sekunden verringerbar. Dies ist insbesondere dadurch erreichbar, dass die Vulkanisationskammer unmittelbar nach dem Entladen durch das Ausschwenken der Gabel mit dem darauf aufgenommenen Reifen über den gestreckten Balg wieder beladen werden kann.

In den nachfolgend beschriebenen Figuren sind beispielhafte Ausführungsformen der Erfindung dargestellt. Es zeigen:
- Figur 1:: Eine perspektivische Ansicht einer erfindungsgemäßen Ausführungsform einer Vorrichtung zur Handhabung von Reifen,
- Figur 2:: Eine perspektivische Detailansicht einer erfindungsgemäßen Reifenheizpresse aufweisend eine erfindungsgemäße Vorrichtung zur Handhabung von Reifen und einen Rollengang,
- Figuren 3-11:: Perspektivische Ansichten eines größeren Ausschnitts der in Figur 2 dargestellten Reifenheizpresse in verschiedenen Betriebszuständen bei der Umsetzung eines erfindungsgemäßen Verfahrens zur Handhabung von Reifen,
- Figur 12:: Die in den Figuren 2 bis 11 dargestellte Reifenheizpresse in einer Draufsicht,
- Figur 13:: Eine Detailansicht der in Figur 12 dargestellten Draufsicht mit in die Vulkanisationskammer geschwenkter Gabel und
- Figur 14:: Eine ausschnittweise Darstellung eines Schnitts durch eine erfindungsgemäße Reifenheizpresse mit geöffneter Vulkanisationskammer.

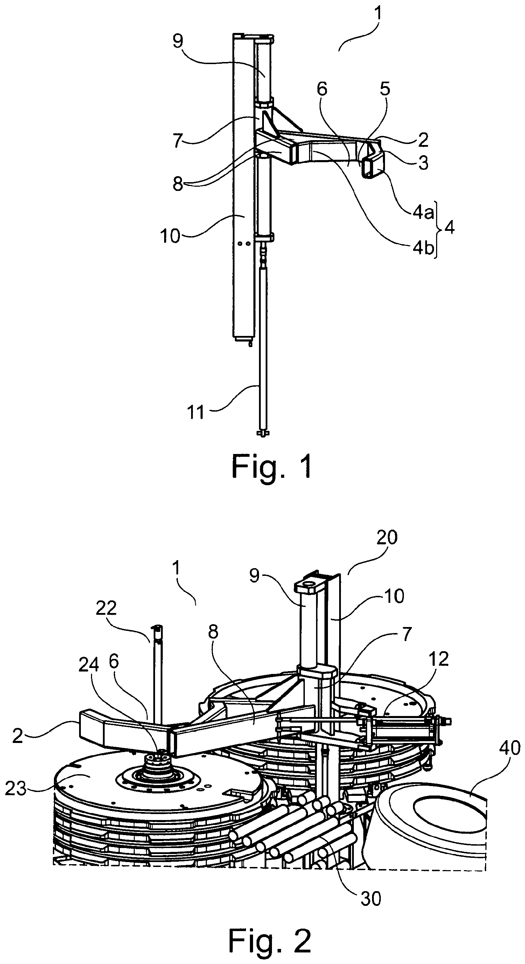

In Figur 1 ist eine erfindungsgemäße Ausführungsform einer Vorrichtung zur Handhabung von Reifen (1) in einer perspektivischen Ansicht dargestellt. Die Vorrichtung zur Handhabung von Reifen (1) weist eine Gabel (2) auf, deren Oberseite zumindest bereichsweise eine Auflage (3) bildet, auf der ein Reifen (40) aufnehmbar ist. Die Gabel (2) ist durch einen ersten Arm (4a) und einen zweiten Arm (4b) gebildet, wobei die Gabel (2) eine offene Seite (5) und einen freien Mittenbereich (6) zwischen den Armen (4) aufweist. Die Gabel (2) ist mithilfe einer Halterung (7), die mit einer in der dargestellten Ausführungsform durch zwei Streben realisierten Verbindungseinrichtung (8) mit den Armen (4) verbunden ist, an einer vertikalen Führung (9) beweglich gelagert. Die vertikale Führung (9) ist fest mit einer vertikalen Säule (10) verbunden, die die Vorrichtung zur Handhabung von Reifen (1) trägt und die beim Betrieb auftretenden Kräfte aufnimmt und ableitet.

Die Gabel (2) ist mithilfe eines Vertikalantriebs (11) in vertikaler Richtung entlang der vertikalen Führung (9) beweglich.

In der dargestellten Ausführungsform der Erfindung sind die Arme (4) und die Verbindungseinrichtung (8) der Gabel (2) als Stahlrohre mit rechteckigem Querschnitt ausgebildet, die miteinander verschweißt sind.

Figur 2 zeigt eine perspektivische Detailansicht einer erfindungsgemäßen Reifenheizpresse (20) aufweisend eine erfindungsgemäße Vorrichtung zur Handhabung von Reifen (1) und einen Rollengang (30), auf dem ein Reifen (40) aufliegt.

Diverse Bauteile der Reifenheizpresse (20), die für die vorliegende Erfindung nicht von unmittelbarer Bedeutung sind, wurden zur Vereinfachung der Darstellungen weggelassen, auch wenn diese für den tatsächlichen Betrieb der Reifenheizpresse (40) zwingend erforderlich sind.

Zu erkennen ist in dieser Ansicht auch, dass die Vorrichtung zur Handhabung von Reifen (1) einen Schwenkantrieb (12) aufweist, mit dem die Gabel (2) um eine durch die vertikale Führung (9) verlaufende vertikale Achse in horizontaler Richtung verschwenkbar ist. Dazu ist die Halterung (7) der Gabel (2) an der vertikalen Führung (9) drehbar gelagert, während der Schwenkantrieb (12) auf einer jochartig ausgebildeten Lagereinrichtung, die um die Halterung (7) der Gabel (2) herumgreift, in horizontaler Richtung starr mit der vertikalen Führung (9) verbunden ist und auf dieser gemeinsam mit der Gabel (2) lediglich in vertikaler Richtung auf der vertikalen Führung (9) beweglich ist. Dies ist beispielsweise durch eine Blockiereinrichtung realisiert, die die jochartige Lagereinrichtung gegen die vertikale Säule (10) abstützt.

In Figur 2 ist die Gabel (2) in die Vulkanisationskammer (22) der Reifenheizpresse (20) eingeschwenkt. Im Hintergrund ist eine weitere Vulkanisationskammer (22) der Reifenheizpresse (20) zu sehen, da es sich um einer Doppelheizpresse handelt.

Durch den freien Mittenbereich (6) der Gabel (2) hindurch erstreckt sich in vertikaler Richtung aus der Basisplatte (23) der Vulkanisationskammer (22) heraus der ausgefahrene Mittenmechanismus (24) der Vulkanisationskammer (22).

Weiterhin weist die Reifenheizpresse (20) einen Rollengang (30) auf, auf dem vulkanisierte Reifen (40) ablegbar sind.

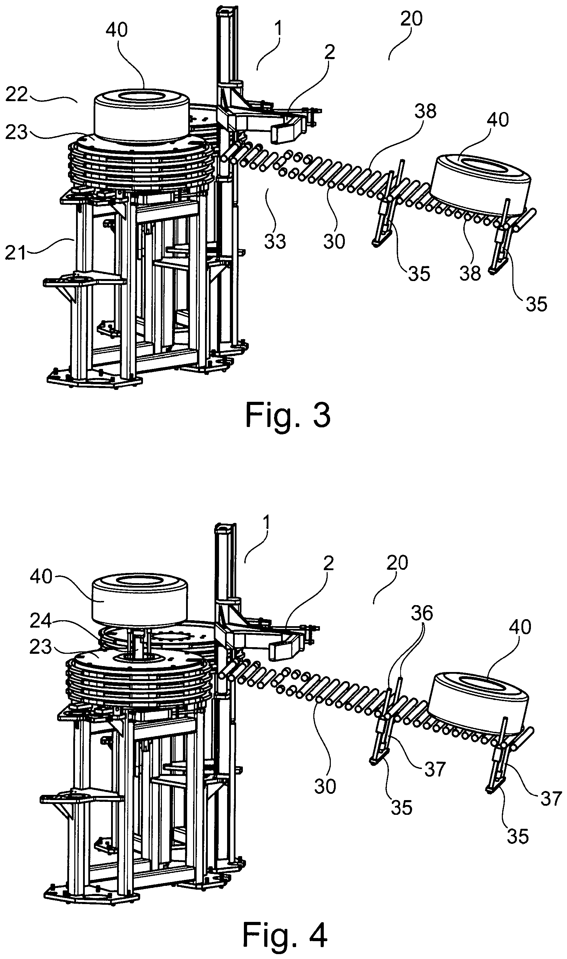

In den Figuren 3 bis 11 sind perspektivische Ansichten eines größeren Ausschnitts der in Figur 2 dargestellten Reifenheizpresse (20) in verschiedenen Betriebszuständen bei der Umsetzung eines erfindungsgemäßen Verfahrens zur Handhabung von Reifen (40) dargestellt.

In Figur 3 ist die Vulkanisationskammer (22) der Reifenheizpresse (20) bereits geöffnet. Die Gabel (2) der Vorrichtung zur Handhabung von Reifen (1) ist in vertikaler Richtung in die Einschwenkposition verfahren. Auf der Grundplatte (23) der Vulkanisationskammer (22) liegt der vulkanisierte Reifen (40). Unterhalb der Grundplatte (23) ist das Gestell (21) der Reifenheizpresse (20) zu sehen. Innerhalb des Reifens (40) ist der Balg (nicht dargestellt) expandiert und klemmt den Reifen (40) von innen.

Die Gabel (2) befindet sich oberhalb des Ablagebereichs (33) des Rollengangs (30).

Auf dem Rollengang befindet sich in einer Warteposition (38) ein bereits aus der Vulkanisationskammer (22) entladener vulkanisierter Reifen (40), wobei der Reifen (40) mithilfe einer Sperrvorrichtung (35) in der Warteposition (38) gehalten wird. Insgesamt weist der dargestellte Rollengang (30) zwei jeweils mit einer Sperrvorrichtung (35) ausgerüstete Wartepositionen (38) auf.

In Figur 4 ist der in der Vulkanisationskammer (22) befindliche Reifen (40) aus der Form (nicht dargestellt) ausgebrochen und mithilfe des Mittenmechanismus (24) nach oben gefahren worden. Die Formsegmente (nicht dargestellt) werden eingezogen.

Die Sperrvorrichtungen (35) weisen jeweils zwei Sperrelemente (36) auf, die als aus der Roll-Ebene des Rollengangs (30) hinausragende Stäbe realisiert sind. Die Sperrelemente (36) sind je Sperrvorrichtung (35) mit einem Sperrantrieb (37) aus der Roll-Ebene des Rollengangs (30) herausfahrbar (Sperrzustand) oder unter die Roll-Ebene einfahrbar (geöffneter Zustand).

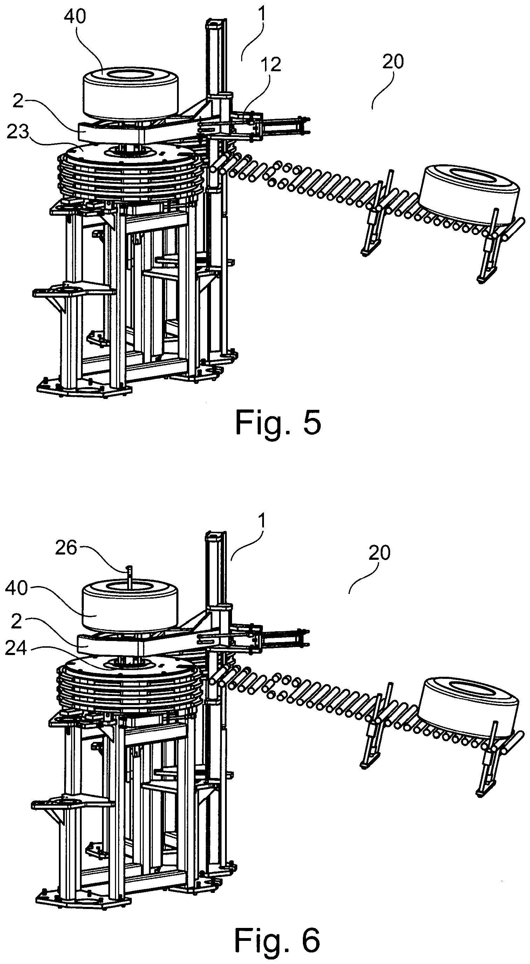

In Figur 5 ist die Gabel (2) mithilfe des Schwenkantriebs (12) in die Vulkanisationskammer (22) der Reifenheizpresse (20) eingeschwenkt. Das Einschwenken erfolgt dabei unterhalb des unteren Klemmtellers (nicht dargestellt) des Mittenmechanismus (24) der Vulkanisationskammer (22), sodass sich die Gabel (2) zwischen der Grundplatte (23) und dem Reifen (40) befindet.

In Figur 6 wird der Balg (nicht dargestellt) durch ein Verfahren des unteren Klemmtellers (nicht dargestellt) nach unten in die untere Lage im Bereich der Grundplatte (23) und des oberen Klemmtellers (nicht dargestellt), der am oberen Ende (26) des nun oben aus dem Reifen (40) herausschauenden Mittenmechanismus (24) angeordnet ist, nach oben hin gestreckt. Dadurch wird der Reifen (40) nicht mehr von innen durch den Balg klemmend fixiert und ist in vertikaler Richtung beweglich.

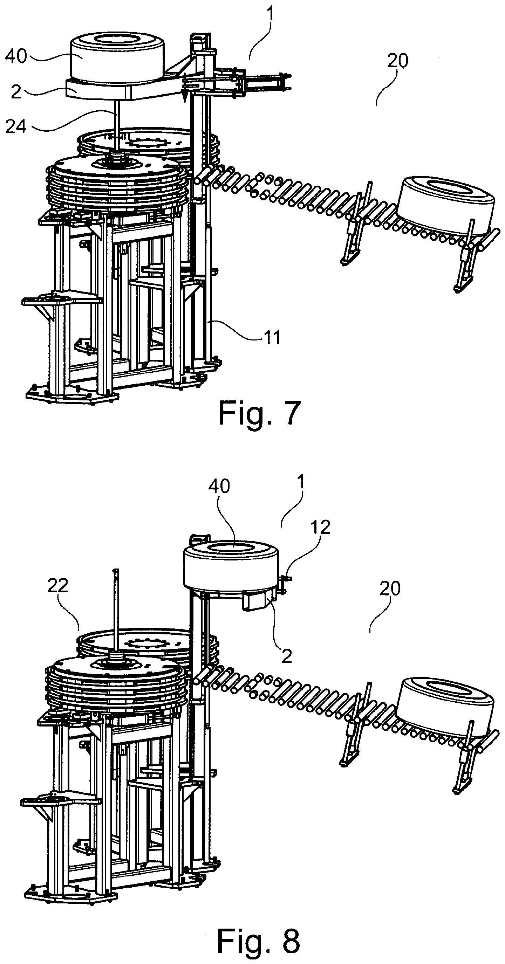

In Figur 7 ist die Gabel (2) mithilfe des Vertikalantriebs (11) nach oben hin in die Ausschwenkposition verfahren, in der der höchste Punkt des gestreckten Mittenmechanismus (24) unterhalb der Gabel (2) liegt. Während des Verfahrens der Gabel (2) nach oben hin wurde der Reifen (40) auf der Auflage (3) der Gabel (2) aufgenommen und liegt nun auf dieser auf.

In Figur 8 ist die Gabel (2) mit dem aufliegenden Reifen (40) mithilfe des Schwenkantriebs (12) aus der Vulkanisationskammer (22) der Reifenheizpresse (20) ausgeschwenkt. Da die Vulkanisationskammer (22) nun frei ist, kann diese wieder mit einem Reifenrohling beladen werden.

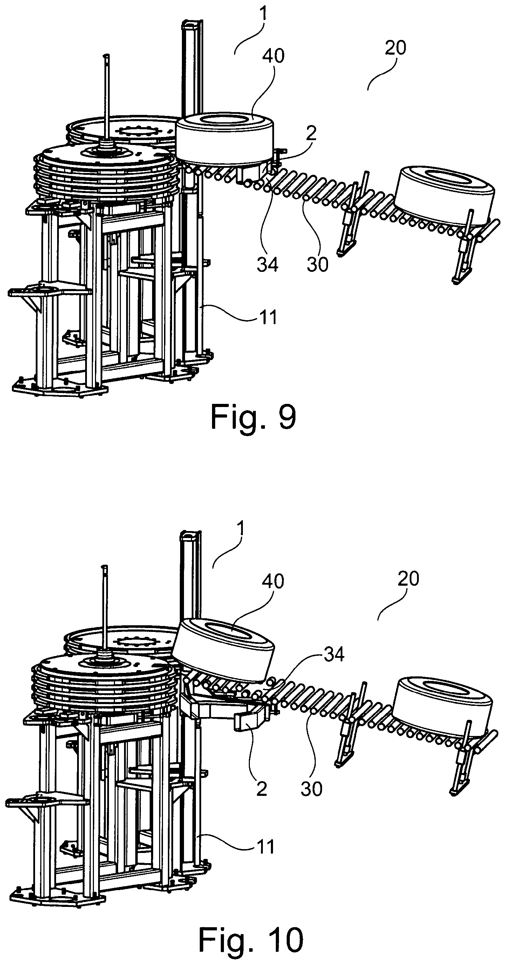

In Figur 9 ist die Gabel (2) der Vorrichtung zur Handhabung von Reifen (1) bereits mithilfe des Vertikalantriebs (11) nach unten hin verfahren, jedoch noch nicht in der Ablageposition angelangt. Die Gabel (2) taucht gerade in die im Ablagebereich (33) des Rollengangs (30) realisierte Aussparung (34) ein und der Reifen (40) liegt noch auf der Auflage (3) der Gabel (2) auf.

In Figur 10 ist die Gabel (2) mithilfe des Vertikalantriebs (11) bis in die Ablageposition unterhalb des Rollengangs (30) verfahren. Der Reifen (40) ist größer als die Gabel (2) bzw. weist eine andere Kontur auf, sodass dieser nicht mit der Gabel (2) durch den Rollengang (30) hindurchtaucht, sondern im Ablagebereich (33) auf diesem abgelegt wird.

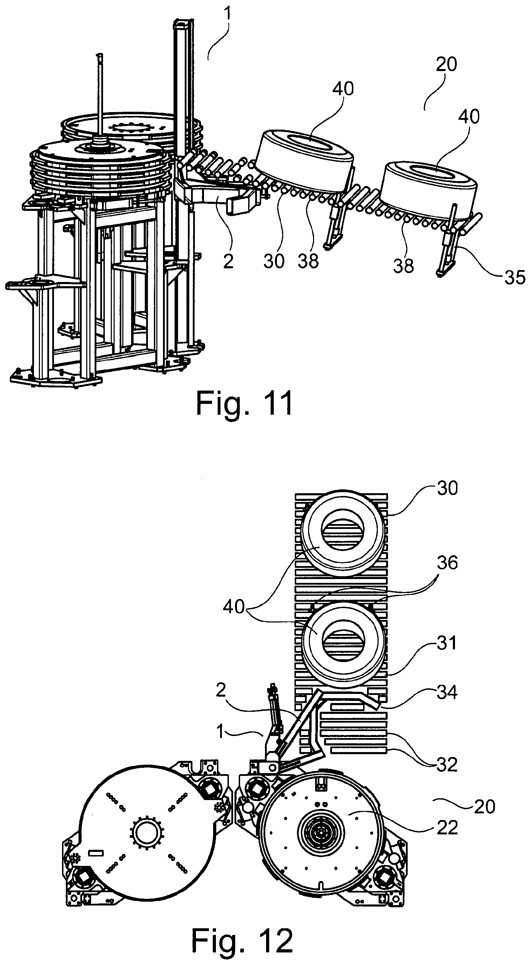

In Figur 11 ist der zuvor im Ablagebereich (33) abgelegte Reifen (40) auf dem von der Vulkanisationskammer (22) der Reifenheizpresse (20) weg abfallenden Rollengang (30) bis in eine Warteposition (38) gerollt.

Figur 12 zeigt die in den Figuren 2 bis 11 dargestellte Reifenheizpresse (20) gemäß dem in Figur 11 gezeigten Betriebszustand in einer Draufsicht.

Auf dem aus einer Vielzahl von nebeneinander angeordneten Rollen (31) gebildeten Rollengang (30) liegen zwei Reifen (40) in jeweils einer Warteposition (38), in der die Reifen (40) mithilfe der Sperreinrichtungen (36) der jeweils zugeordneten Sperrvorrichtung (35) gehalten werden.

Im Ablagebereich (33) des Rollengangs (30) ist die der Form der Gabel (2) entsprechende Aussparung (34) zu erkennen, die durch die Anordnung von Rollensegmenten (32) mit entsprechenden Abständen in Richtung der Drehachse der Rollensegmente (32) realisiert ist.

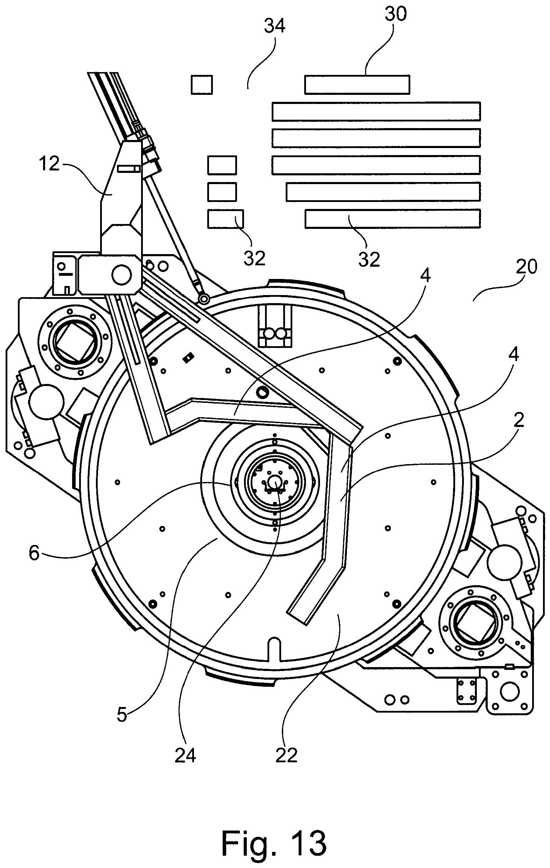

In Figur 13 ist eine Detailansicht der in Figur 12 dargestellten Draufsicht mit einer in die Vulkanisationskammer (22) der Reifenheizpresse (20) eingeschwenkten Gabel (2) der Vorrichtung zur Handhabung von Reifen (1) dargestellt.

Es ist gut zu erkennen, dass die offene Seite (5) und der freie Mittenbereich (6) der Gabel (2) erforderlich sind, um in der eingeschwenkten Position um den Mittenmechanismus (24) herumzugreifen und gleichzeitig eine sichere Aufnahme eines hier nicht dargestellten Reifens (40) auf der mithilfe der Gabel (2) gebildeten Auflage (3) zu gewährleisten.

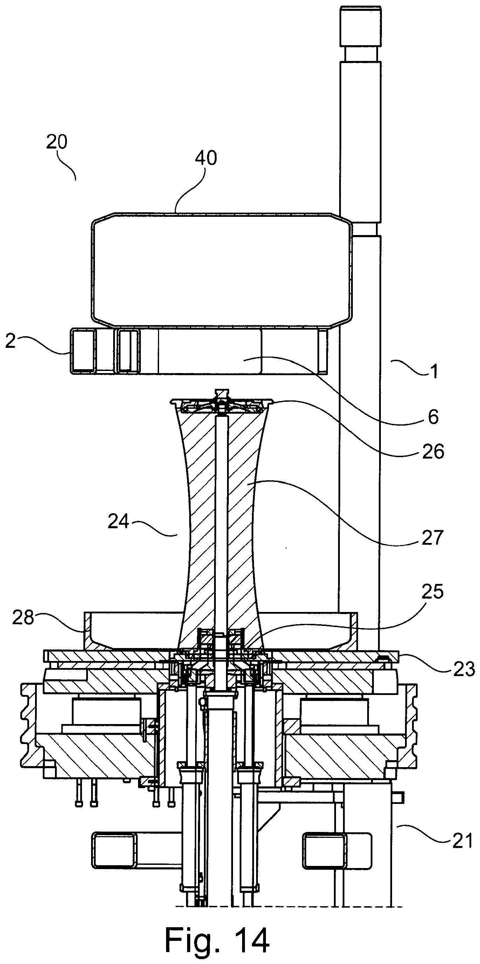

Figur 14 zeigt eine ausschnittweise Darstellung eines Schnitts durch eine Ausführungsform einer erfindungsgemäßen Reifenheizpresse (20) mit geöffneter Vulkanisationskammer (22). Der Reifen (40) liegt auf der Gabel (2) der Vorrichtung zur Handhabung von Reifen (1) auf, wobei die Gabel (2) bereits in die Ausschwenkposition verfahren ist. Dabei befindet sich die Unterseite der Gabel (2) oberhalb des oberen Endes des Mittenmechanismus (24) im Bereich des oberen Klemmtellers (26), sodass der Mittenmechanismus (24) nicht im Schwenkweg der Gabel (2) beim Ausschwenken liegt.

In dieser Darstellung sichtbar ist auch der Balg (27), der durch das Verfahren des oberen Klemmtellers (26) nach oben und des unteren Klemmtellers (25) nach unten gestreckt ist.

Auf der Grundplatte (23) der Reifenheizpresse (20) ist das untere Formteil (28) der Form angeordnet, aus der der Reifen (40) nach der Vulkanisation ausgebrochen wurde.

## Patentansprüche

1. Vorrichtung zur Handhabung von Reifen (1), aufweisend eine vertikale Säule (10), eine vertikale Führung (9), einen Vertikalantrieb (11) und einen Schwenkantrieb (12) sowie eine Gabel (2), die auf der vertikalen Führung (9) in vertikaler Richtung mithilfe des Vertikalantriebs (11) verschiebbar und in horizontaler Richtung mithilfe des Schwenkantriebs (12) verschwenkbar ist, **dadurch gekennzeichnet, dass** die Gabel (2) eine an der vertikalen Führung (9) in vertikaler Richtung verschiebbar gelagerte Halterung (7) aufweist, dass die Halterung (7) der Gabel (2) zusätzlich in horizontaler Richtung schwenkbar an der vertikalen Führung (9) gelagert ist und dass die Gabel (2) auf ihrer Oberseite eine Auflage (3) für einen Reifen (40) aufweist, auf der ein Reifen (40) aufnehmbar ist.

2. Vorrichtung zur Handhabung von Reifen (1) nach Anspruch 1, **dadurch gekennzeichnet, dass** die Auflage (3) zweigeteilt mit einem freien Mittenbereich (6) und einer offenen Seite (5) ausgebildet ist.

3. Vorrichtung zur Handhabung von Reifen (1) nach einem der vorstehenden Ansprüche, **dadurch gekennzeichnet, dass** die Gabel (2) zwei Arme (4) aufweist, die den freien Mittenbereich (6) mit Ausnahme der offenen Seite (5) seitlich umschließen.

4. Reifenheizpresse (20) aufweisend mindestens eine Vulkanisationskammer (22), die nach unten hin durch eine Basisplatte (23) begrenzt ist, und einen der Vulkanisationskammer (22) zugeordneten Mittenmechanismus (24), mit dem ein vulkanisierter Reifen (40) von der Basisplatte (23) anhebbar ist, **dadurch gekennzeichnet, dass** diese mindestens eine Vorrichtung zur Handhabung von Reifen (1) nach einem der Ansprüche 1 bis 3 aufweist.

5. Reifenheizpresse (20) nach Anspruch 4, **dadurch gekennzeichnet, dass** die Vorrichtung zur Handhabung von Reifen (1) zur Entladung von Reifen (40) aus der Vulkanisationskammer (22) der Reifenheizpresse (20) ausgebildet ist.

6. Reifenheizpresse (20) nach einem der Ansprüche 3 und 4, **dadurch gekennzeichnet, dass** diese zur Abförderung der aus der Vulkanisationskammer (22) entladenen Reifen (40) einen Rollengang (30) aufweist.

7. Reifenheizpresse (20) nach Anspruch 6, **dadurch gekennzeichnet, dass** der Rollengang (30) in Transportrichtung der Reifen (40) von der Reifenheizpresse (20) weg schräg nach unten hin abfällt.

8. Reifenheizpresse (20) nach Anspruch 7, **dadurch gekennzeichnet, dass** die Neigung des Rollengangs (30) so ausgeführt ist, dass ein auf dem Rollengang (30) abgelegter Reifen (40) durch die auf den Reifen (40) wirkende Schwerkraft auf dem Rollengang (30) rollt.

9. Reifenheizpresse (20) nach einem der Ansprüche 6 bis 8, **dadurch gekennzeichnet, dass** der Rollengang (30) einen Ablagebereich (33) zur Ablage eines Reifens (40) aufweist, wobei der Ablagebereich (33) eine Aussparung (34) im Rollengang (30) aufweist, sodass die Gabel (2) einer Vorrichtung zur Handhabung von Reifen (1) gemäß einem der Ansprüche 1 bis 6 durch den Rollengang (30) in vertikaler Richtung hindurch bewegbar ist.

10. Reifenheizpresse (20) nach einem der Ansprüche 6 bis 9, **dadurch gekennzeichnet, dass** diese im Bereich des Rollengangs (30) mindestens eine Warteposition (38) für einen auf dem Rollengang (30) abgelegten Reifen (40) aufweist, wobei das Halten eines Reifens (40) in einer Warteposition (38) durch mindestens eine Sperrvorrichtung (35) realisiert ist.

11. Verfahren zur Handhabung von Reifen (40) unter Verwendung der Vorrichtung nach einem der Ansprüche 1 bis 3, aufweisend die folgenden Verfahrensschritte
- Verfahren der Gabel (2) der Vorrichtung in vertikaler Richtung in eine Einschwenkposition
- Einschwenken der Gabel (2) unter einen in einer geöffneten Vulkanisationskammer (22) einer Reifenheizpresse (20) befindlichen Reifen (40)
- Verfahren der Gabel (2) nach oben in eine Ausschwenkposition, wobei der Reifen (40) auf einer Auflage (3) der Gabel (2) aufgenommen wird
- Ausschwenken der Gabel (2) mit dem auf der Gabel (2) liegenden Reifen (40) aus der Vulkanisationskammer (22) der Reifenheizpresse (20)
- Verfahren der Gabel (2) nach unten in eine Ablageposition und Ablegen des Reifens (40)

12. Verfahren zur Handhabung von Reifen (40) nach Anspruch 11, **dadurch gekennzeichnet, dass** eine Vorrichtung zur Handhabung von Reifen (1) nach einem der Ansprüche 1 bis 3 verwendet ist.

## Claims

1. Device for handling tyres (1), having a vertical column (10), a vertical guide (9), a vertical drive (11) and a pivoting drive (12) as well as a fork (2), which is displaceable in the vertical direction on the vertical guide (9) with the aid of the vertical drive (11) and is pivotable in the horizontal direction with the aid of the pivoting drive (12), **characterized in that** the fork (2) has a holder (7), which is displaceably mounted in the vertical direction on the vertical guide (9), **in that** the holder (7) of the fork (2) is additionally mounted pivotably in the horizontal direction on the vertical guide (9) and **in that** the fork (2) has on its upper side a support (3) for a tyre (40), on which a tyre (40) can be taken up.

2. Device for handling tyres (1) according to Claim 1, **characterized in that** the support (3) is designed as divided in two, with a free central region (6) and an open side (5).

3. Device for handling tyres (1) according to one of the preceding claims, **characterized in that** the fork (2) has two arms (4), which laterally enclose the free central region (6) with the exception of the open side (5).

4. Tyre curing press (20) having at least one vulcanizing chamber (22), which is downwardly bounded by a base plate (23), and a central mechanism (24), which is assigned to the vulcanizing chamber (22) and with which a vulcanized tyre (40) can be raised from the base plate (23), **characterized in that** it has at least one device for handling tyres (1) according to one of Claims 1 to 3.

5. Tyre curing press (20) according to Claim 4, **characterized in that** the device for handling tyres (1) is designed for unloading tyres (40) from the vulcanizing chamber (22) of the tyre curing press (20) .

6. Tyre curing press (20) according to either of Claims 3 and 4, **characterized in that** it has a roller table (30) for conveying away the tyres (40) unloaded from the vulcanizing chamber (22).

7. Tyre curing press (20) according to Claim 6, **characterized in that** the roller table (30) slopes away in a downwardly descending manner from the tyre curing press (20) in the transporting direction of the tyres (40).

8. Tyre curing press (20) according to Claim 7, **characterized in that** the slope of the roller table (30) is made such that a tyre (40) set down on the roller table (30) rolls on the roller table (30) as a result of the gravitational force acting on the tyre (40).

9. Tyre curing press (20) according to one of Claims 6 to 8, **characterized in that** the roller table (30) has a setting-down region (33) for the setting down of a tyre (40), the setting-down region (33) having a clearance (34) in the roller table (30), so that the fork (2) of a device for handling tyres (1) according to one of claims 1 to 6 can be moved through the roller table (30) in the vertical direction.

10. Tyre curing press (20) according to one of Claims 6 to 9, **characterized in that** it has in the region of the roller table (30) at least one waiting position (38) for a tyre (40) set down on the roller table (30), the keeping of a tyre (40) in a waiting position (38) being realized by at least one arresting device (35) .

11. Method for handling tyres (40) using the device according to one of Claims 1 to 3, having the following method steps:
- moving the fork (2) of the device in the vertical direction into a pivoting-in position
- pivoting in the fork (2) under a tyre (40) located in an open vulcanizing chamber (22) of a tyre curing press (20)
- moving the fork (2) upward into a pivoting-out position, the tyre (40) being taken up on a support (3) of the fork (2)
- pivoting out the fork (2) with the tyre (40) lying on the fork (2) out of the vulcanizing chamber (22) of the tyre curing press (20)
- moving the fork (2) downward into a setting-down position and setting down the tyre (40).

12. Method for handling tyres (40) according to Claim 11, **characterized in that** a device for handling tyres (1) as claimed in one of claims 1 to 3 is used.

## Revendications

1. Dispositif de manipulation de pneus (1), présentant une colonne verticale (10), un guide vertical (9), un entraînement vertical (11) et un entraînement pivotant (12) ainsi qu'une fourche (2) qui peut être déplacée sur le guide vertical (9) dans la direction verticale à l'aide de l'entraînement vertical (11) et peut être amenée à pivoter dans la direction horizontale à l'aide de l'entraînement pivotant (12),
**caractérisé en ce que** la fourche (2) présente une attache (7) montée mobile dans la direction verticale au niveau du guide vertical (9), **en ce que** l'attache (7) de la fourche (2) est en outre montée pivotante dans la direction horizontale au niveau du guide vertical (9), et **en ce que** la fourche (2) présente sur sa face supérieure un support (3) pour un pneu (40) sur lequel un pneu (40) peut être reçu.

2. Dispositif de manipulation de pneus (1) selon la revendication 1, **caractérisé en ce que** le support (3) est réalisé en deux parties avec une zone centrale libre (6) et un côté ouvert (5).

3. Dispositif de manipulation de pneus (1) selon l'une quelconque des revendications précédentes, **caractérisé en ce que** la fourche (2) présente deux bras (4) qui entourent latéralement la zone centrale libre (6) à l'exception du côté ouvert (5).

4. Presse de vulcanisation de pneus (20), présentant au moins une chambre de vulcanisation (22) qui est limitée vers le bas par une plaque de base (23), et un mécanisme central (24) associé à la chambre de vulcanisation (22) qui permet de soulever un pneu (40) de la plaque de base (23), **caractérisée en ce qu'**elle présente au moins un dispositif de manipulation de pneus (1) selon l'une quelconque des revendications 1 à 3 .

5. Presse de vulcanisation de pneus (20) selon la revendication 4, **caractérisée en ce que** le dispositif de manipulation de pneus (1) est réalisée pour décharger des pneus (40) de la chambre de vulcanisation (22) de la presse de vulcanisation de pneus (20).

6. Presse de vulcanisation de pneus (20) selon l'une quelconque des revendications 3 et 4, **caractérisée en ce qu'**elle présente un convoyeur à rouleaux (30) pour évacuer les pneus (40) déchargés de la chambre de vulcanisation (22).

7. Presse de vulcanisation de pneus (20) selon la revendication 6, **caractérisée en ce que** le convoyeur à rouleaux (30) descend en biais vers le bas en s'éloignant de la presse de vulcanisation de pneus (20) dans la direction de transport des pneus (40).

8. Presse de vulcanisation de pneus (20) selon la revendication 7, **caractérisé en ce que** l'inclinaison du convoyeur à rouleaux (30) est réalisée de telle sorte qu'un pneu (40) déposé sur le convoyeur à rouleaux (30) roule sur le convoyeur à rouleaux (30) sous l'effet de la gravité agissant sur le pneu (40).

9. Presse de vulcanisation de pneus (20) selon l'une quelconque des revendications 6 à 8, **caractérisé en ce que** le convoyeur à rouleaux (30) présente une zone de dépose (33) pour déposer un pneu (40), dans laquelle la zone de dépose (33) présente un évidement (34) dans le convoyeur à rouleaux (30) de sorte que la fourche (2) d'un dispositif de manipulation de pneus (1) selon l'une quelconque des revendications 1 à 6 peut être déplacée à travers le convoyeur à rouleaux (30) dans la direction verticale.

10. Presse de vulcanisation de pneus (20) selon l'une quelconque des revendications 6 à 9, **caractérisé en ce qu'**elle présente dans la zone du convoyeur à rouleaux (30) au moins une position d'attente (38) pour un pneu (40) déposé sur le convoyeur à rouleaux (30), dans laquelle le maintien d'un pneu (40) dans une position d'attente (38) est réalisé par au moins un dispositif de blocage (35).

11. Procédé de manipulation de pneus (40) utilisant le dispositif selon l'une quelconque des revendications 1 à 3, présentant les étapes de procédé suivantes consistant à
- déplacer la fourche (2) du dispositif dans la direction verticale dans une position de pivotement vers l'intérieur,
- faire pivoter vers l'intérieur la fourche (2) sous un pneu (40) se trouvant dans une chambre de vulcanisation ouverte (22) d'une presse de vulcanisation de pneus (20),
- déplacer la fourche (2) vers le haut dans une position de pivotement vers l'extérieur, le pneu (40) étant reçu sur un support (3) de la fourche (2),
- faire pivoter vers l'extérieur la fourche (2) avec le pneu (40) posé sur la fourche (2) hors de la chambre de vulcanisation (22) de la presse de vulcanisation de pneus (20),
- déplacer la fourche (2) vers le bas dans une position de dépose, et déposer le pneu (40).

12. Procédé de manipulation de pneus (40) selon la revendication 11, **caractérisé en ce qu'**un dispositif de manipulation de pneus (1) selon l'une quelconque des revendications 1 à 3 est utilisé.
